# EUROPEAN PATENT APPLICATION

(11) **EP 1 312 268 A1**
(43) Date of publication of application: **21.05.2003**
(21) Application number: 01127535.1
(22) Date of filing: 19.11.2001
(51) Int. Cl.: A23L 1/227, A23L 1/23, A23L 1/231, A23J 3/34

(54) **Flavouring compositions**

(71) Applicant: Société des Produits Nestlé S.A., 1800 Vevey (CH)
(72) Inventor: Schlichtherle-Cerny, Hedwig, 1093 La Conversion (CH); Amado, Renato, 6005 Luzern (CH)
(74) Representative: Wavre, Claude-Alain

(57) **Abstract**

The present invention relates to flavouring compositions and use of such compositions containing pyro glutamylpeptides derivatives as taste enhancers in order to impart umami taste to food-stuffs.

## Description

The present invention relates to the subject of flavour enhancing compositions for flavouring food-stuffs. The present invention particularly relates to compositions with umami taste.
Proteolytic reactions play an important role for the development of flavor in protein-rich foods like cheese, meat, sausage, and fermented soy products. During proteolysis in fermentative or pure enzymatic processes free amino acids and peptides are formed. Hydrolyzed vegetable proteins, e.g. soy sauce, are widely used as savory ingredients in a variety of foods because of their "umami" taste properties.
Besides the four basic tastes sweet, acid, salty and bitter, the glutamate-like taste has been widely discussed in the literature and confirmed as the fifth basic taste (Chaudhari et al [2000] Nat. Neurosci. 3: 113). The Japanese word "umami" means delicious and is used as a synonym for the characteristic sensory properties of monosodium glutamate (MSG) and certain purine-5'-nucleotides like inosine-5'-monophosphate (5'-IMP) or guanosine-5'-monophosphate (5'-GMP). A particularly important characteristic of the "umami" substances is their ability to enhance the flavor (aroma and taste) and the mouthfeel of savory dishes. Another peculiar property of umami compounds is their mutual taste synergism. In particular, MSG and 5'-nucleotide derivatives exhibit a strong mutual synergism, thus increasing the umami taste sensation.

The synergistic effects especially between MSG and purine-5'-nucleotides have been studied intensively and systematically. MSG and certain nucleotide derivatives are present in various savoury foods. They are also widely used as flavour and taste enhancers in foodstuffs such as snacks and culinary products. Since several years, the flavour and food industry is interested in developing alternative flavour enhancing systems for culinary products. Thus, food manufacturers aim at finding new molecules imparting the umami character as known from MSG in order to reduce its added amount in manufactured products.
In addition to MSG and 5'-nucleotides, some other molecules have been reported as umami-like compounds, such as organic acids like tartaric and succinic acid (Ney [1971] Z. Lebensm. Unters. Forsch. 146: 141; Velisek et al. [1978] Nahrung 22: 735) and di- to octapeptides (Yamasaki and Maekawa [1978] Agric. Biol. Chem. 42: 1761; Noguchi et al. [1975] J. Agric. Food Chem. 23: 49).

WO 9704667 discloses tripeptides containing a hydrophobic amino acid residue and at least one acidic amino acid residue as well as amino acid derivatives with an N-lactoyl residue as flavouring ingredients to impart savoury taste and increase the mouthfeel of foodstuffs. It is also disclosed that these peptides and derivatives can mimic organoleptic features of MSG.

A tetrapeptide from a yeast seasoning consisting of four aspartic acid residues was described as eliciting glutamate-like and bouillon-like taste qualities and as masking the bitter note of the yeast extract (Matsushita & al. [1994] Pept. Chem. 32 : 249-251)*0*. Other acidic peptides were found in a fraction of an enzymatic fish protein hydrolysate, e.g. Glu-Asp-Glu, Asp-Glu-Ser, Thr-Glu and Ser-Glu-Glu and were reported to have sensory properties similar to sodium glutamate (Noguchi & al [1975] J. Agric. Food Chem. 23 : 49-53). JP 25632695 discloses the use of pyroglutamyl peptides for masking and reducing the bitterness of foods or beverages having bitter taste.

The aim of the present invention is concerned with the problem of providing alternative flavouring compositions to MSG in order to impart umami taste to food products.

To this end, the present invention relates to a flavouring composition useful for imparting umami taste to food products, which comprises at least one pyroglutamyl peptide of the general formula :

pGlu-Pro-(X)ₙ

where n is 0 or 1
and X is selected from the group consisting of hydrophilic amino acids.
Preferably, X is selected from the group consisting of Ser, Glu and Gln.

According to the nomenclature for amino acids and peptides from IUPAC IUB-CBN, the respective meanings of the three-letter codes pGlu, Pro, Ser, Glu and Gln are pyroglutamic acid, proline, serine, glutamic acid and glutamine, respectively. The different amino acids of the pyroglutamyl peptides of the composition according to the present invention are bound through peptidic bonds.

In an other aspect, the present invention provides the use of at least one pyroglutamyl peptide of the general formula :

pGlu-Pro-(X)ₙ

where n is 0 or 1 and X is selected from the group consisting of hydrophilic amino acids, in food products in an effective amount in order to induce an umami taste perception upon consumption.
Preferably, X is selected from the group consisting of Ser, Glu and Gln.
The food products that are concerned with the use of the pyroglutamyl peptides according to the present invention may be dehydrated products such as bouillons, soups, snacks, cereal products, process flavours, culinary products such as cooking aids or powdered flavourings for example, but also intermediate moisture foods such as spreadable pastes, sausages, and petfoods as well, for exemple. However, the pyroglutamyl peptides according to the present invention may also be used in full moisture foods, like chilled prepared meals, frozen meals, such as pizzas for example.
In a third aspect, the present invention provides a method for inducing an umami taste perception to consumers of a food product by adding an effective amount of the flavouring composition containing pyroglutamyl peptides according to the present invention to the food product.

Hence, the flavouring compositions according to the present invention allow to improve and to increase the mouthfeel of the food to which they are added. Thus, it has been found that the flavouring compositions according to the present invention are able to mimic the sensory properties of MSG, the typical umami taste ingredient widely used as a flavour enhancing compound. The flavouring compositions according to the present invention can contribute to give or to reinforce the umami taste features in the food products in which they are incorporated. Such compositions can then replace, at least partially, monosodium glutamate in foodstuffs in which flavour enhancers are desired.

Such results are particularly unexpected and surprising. Indeed, even if some flavouring compositions containing peptides have been presented as able to mimic umami taste, according to our knowledge, it is the first time that a flavouring composition containing pyroglutamyl peptides eliciting umami taste is disclosed. In fact, no prior art discloses any information regarding the umami properties of pyroglutamyl peptides. A process for manufacturing a flavouring composition containing pyroglutamyl peptides that may be used according to the present invention comprising the steps of :
- enzymatically hydrolysing vegetable protein containing material,
- thermally inactivating the enzymes responsible for the hydrolysis,
- separating the liquid part from the solid part of the hydrolysate and
- recovering the flavouring composition rich in pyroglutamyl peptides from the liquid part.

As starting vegetable protein containing material, one may use wheat, wheat gluten, soya, maize, and/or the suitably isolated protein fractions thereof, for example. The preferred vegetable protein containing material may be partially deamidated wheat gluten. The partial deamidation of wheat gluten may easily be achieved by a treatment with hydrochloric acid at a pH of about 1 to 2 and at a temperature of about 60 to 70°C for 18 to 36 hours.
The enzymatic hydrolysis may be carried out with added technical proteolytic enzymes such as proteases, peptidases and/or glutaminases. However, the hydrolysis may also be carried out by fermentation using microorganisms like molds. Indeed, in the so-called koji process, Aspergilli molds produce enzymes that are able to hydrolyse proteins from the starting material. A koji fermentation may also be suitable to produce a hydrolysate.
Usually, the hydrolysis process is advantageously carried out in an aqueous suspension of about 20 to 30% dry matter in a jar, flask or bioreactor, for example. The temperature at which the hydrolysis is carried out may range from 40°C to 65°C, and the duration may be of 6 hours or more.
The hydrolysate obtained after hydrolysis may be heated at about 90 to 100°C for about 5 to 15 minutes in order to inactivate the enzymes before being subjected to the solid/liquid separating step. The liquid part of the hydrolysate may also be subjected to an optional drying step by freeze-drying or spray-drying, for example.
In order to recover and fractionate the pyroglutamyl peptides of the hydrolysate, the liquid part may be filtered or dried and then resuspended in filtered water in order to be subjected to recovering and fractionation steps using a suitable combination of chromatographic techniques.
Hence, in order to recover the umami taste active pyroglutamyl peptides of the hydrolysate, the liquid part, either filtered or dried and resuspended in water, may be subjected to gel permeation chromatography (GPC), reversed phase high performance liquid chromatography (RP-HPLC), ion exchange chromatographic techniques and/or fast protein liquid chromatography (FPLC) techniques, for example.

The fractionated samples of the hydrolysate obtained after the different chromatographic steps may be subjected to both sensory assessment and chemical analysis.
The sensory analysis may be performed with a panel of trained assessors in order to evaluate the different taste attributes.
The chemical analysis of the fractionated hydrolysate allows to characterize the peptides by mass spectroscopy and by their amino acid compositions.

### Methodologies

### Preparation of Hydrolysate.

The hydrolysate was obtained by enzymatic hydrolysis of partially deamidated wheat gluten (minimum protein content 76 %) with Flavourzyme™ (4.0 mg/100 g) and subsequent enzyme deactivation. Partially deamidated wheat gluten was obtained by a treatment with hydrochloric acid (32 %) in aqueous suspension (24 % dry matter) at pH 1.0 and 65 °C for 24 h. The pH was adjusted to 6.0 with sodium hydroxide solution (50 %) prior to the enzymatic hydrolysis.

The hydrolysis was carried out in aqueous suspension (24 % dry matter) at pH 6.0 and 55 °C during 16 h. The enzymes were deactivated at 95 °C for 10 min. After filtration the obtained solutions were spray-dried to yield beige powders.

### Chemical Analysis.

Free amino acids were analyzed in duplicates after pre-column derivatization with phenyl isothiocyanate according to Bidlingmeyer & al. [1984]. J. Chromatogr. 36, 93-104. Total amino acids were determined in duplicates after hydrolysis at 110°C for 24 h with hydrochloric acid (6 mol/L) prior to the derivatization with phenyl isothiocyanate.

### Gel Permeation Chromatography.

The FPLC system comprised a LCC-501 Plus controller, a P-500 pump, a Frac-100 fraction collector (Amersham Pharmacia Biotech, Uppsala, Sweden), and a microprocessor conductivity meter LF 537 (Gerber Instruments K. Schneider, Effretikon, Switzerland) using the software FPLCdirector™ version 1.10 (Amersham Pharmacia Biotech). An ultrafiltered solution of powdered hydrolysate in deionized water (200 g/L; Mᵣ < 3000; 10 mL) was applied onto a water-cooled Sephadex™ G10 column (2.6 x 64 cm) and eluted with aqueous ethanol solution (15 %, *v*/*v*; 39 mL/h). The effluent was monitored for its UV absorbance at 280 nm and for its electrical conductivity, and separated into fractions. The fractions were freeze-dried and stored at -20 °C prior to use.

### High Performance Liquid Chromatography.

RP-HPLC was performed on a LaChrom™ HPLC system (Merck, Dietikon, Switzerland) equipped with a diode array detector (L-4750) and a column thermostat (L-7360) set to 50 °C. Analytical chromatography was carried out using a ODS-AQ RP-18 column (3 µm, 4 x 250 mm, guard column 4 x 20 mm, YMC, Kyoto, Japan). Semi-preparative chromatography was performed with a 201SP510 RP-18 column (5 µm, 10 x 250 mm, Vydac, Hesperia, CA). The mobile phase consisted of an aqueous solution of ammonium acetate (10 mmol/L, pH 6.0, solvent A) and a solution of ammonium acetate in 60 % aqueous methanol (10 mmol/L, pH 6.0, solvent B). The gradient was as follows: 0 to 70 % B from 7 to 30 min; 70 to 100 % B from 30 to 35 min; 100 % B from 35 to 43 min. The flow was 0.8 ml/min for analytical RP-HPLC and 3.1 ml/min for semi-preparative RP-HPLC. Nine fractions (each 5 min) were collected and freeze-dried.

RP-HPLC fraction were re-chromatographed using the analytical RP-HPLC system described above and the following mobile phases : aqueous formic acid (10 mmol/L, solvent A) and a solution of formic acid in 60 % aqueous acetonitrile (10 mmol/L, solvent B). The gradient was 0 to 30 % B from 10 to 50 min. The effluent corresponding to single peaks were collected, freeze-dried and used for peptide analysis.

### Peptide Analysis.

Peptides were characterized by their amino acid composition after acidic hydrolysis and by electrospray ionization-tandem mass spectrometry (ESI-MS/MS) using a LCQ ion trap mass spectrometer (ThermoFinnigan, San Jose, CA). The ESI source was set to 4.5 kV and the interface capillary heater to 200 °C. The MS and MS/MS spectra were obtained in the positive ionization mode using nitrogen as sheath and auxiliary gas. Automated MS/MS spectra were acquired with a relative collision energy for CID preset at 35 %. The scan range was *m*/*z* 50-1000. The samples were infused directly into the mass spectrometer by a syringe pump at a flow of 5 µL/min.

### Sensory Analysis.

The panel was composed of 8 trained assessors. The panel was trained with reference solutions for the taste attributes "sweet", "sour", "salty", "glutamate-like, umami" and "bitter", and with mixtures of the reference stimuli.
The powdered hydrolysate was dissolved in deionized water at a concentration of 10 g/L. The freeze-dried fractions obtained by gel permeation chromatography of 2 g hydrolysate were dissolved in 200 mL deionized water, and the freeze-dried HPLC fractions were redissolved in 200 mL deionized water. All samples were tasted at 22 ± 2 °C. The panelists were asked to evaluate the taste qualities and to judge the intensities of the solutions using a 100-mm line scale. The values given by the panelists were averaged.

### Results

### Chemical and Sensory Characterization of Wheat Gluten Hydrolysates.

The degrees of hydrolysis were between 25 and 35 % indicating that the majority of the amino acids was present as small peptides. The contents of peptide-bound and free amino acids were around 50 % and approximately about 25 % in the hydrolysates, respectively.

### Fractionation by gel permeation chromatography and high performance liquid chromatography.

An ultrafiltered solution of the hydrolysate (Mᵣ < 3000) was fractionated using gel permeation chromatography (GPC, Sephadex™ G10, cut-off Mᵣ > 700) to localize the glutamate-like taste compounds. The column effluent was separated into seven fractions. The obtained fractions were dissolved in water corresponding to a concentration of the hydrolysate of 10 g/L. The sensory evaluation of the fractions revealed that the savory taste was predominant in fraction F2, followed by F4 and F3 (Table 1). F2 showed the most intense glutamate-like taste among all fractions and also exhibited a sour and a salty note. In contrast to the other fractions, F2 was not perceived as bitter. Fraction F3 also revealed a glutamate-like taste apart from a significantly stronger saltiness and bitterness than that of F2. In F4 the bitter taste was the most intense taste quality although it did elicit a glutamate-like and salty note, too. F1 and F5 to F7 showed hardly other tastes than bitterness. The fractions F2 through F7 contain only low molecular weight compounds (Mᵣ < 700) and consequently, these findings indicate that low molecular weight compounds contribute to the glutamate-like taste of the hydrolysate.

**Table 1.**

| **Taste Profiles of Fractions Obtained by Gel Permeation Chromatography**^{***a***} | | | | | | | |
|---|---|---|---|---|---|---|---|
| taste attribute | F1 | F2 | F3 | F4 | F5 | F6 | F7 |
| sweet | 4 (±3) | 0 (±0) | 0 (±0) | 0 (±0) | 2 (±1) | 1 (±1) | 3 (±3) |
| sour | 0^{*b*}(±0) | 19^{*c*}(±9) | 0^{*b*}(±0) | 0^{*b*}(±0) | 4^{*b*}(± 3) | 1^{*b*}(±1) | 0^{*b*}(±0) |
| salty | 0^{*b*}(±0) | 19^{*c*}(±4) | 28^{*d*}(±18) | 19^{*c*}(±4) | 1^{*b*}(±1) | 0^{*b*}(±0) | 0^{*b*}(±0) |
| glutamate-like | 1^{*b*}(±1) | 46^{*d*}(±19) | 21^{*c*}(± 6) | 24^{*c*}(± 12) | 6^{*b*}(±4) | 0^{*b*}(±0) | 0^{*b*}(±0) |
| bitter | 14^{*c*}(±7) | 0^{*b*}(±0) | 16^{*c*}(±8) | 28^{*d*}(±11) | 16^{*c*}(±7) | 6^{*b*}(±3) | 32^{*d*}(±15) |

| | | | | | | | |
|---|---|---|---|---|---|---|---|
| ^{a}The data are expressed as taste intensities (means) scored on a 100 mm line scale (ranging from 0 = absent to 100 = very strong) by 8 trained panelists. ^{*b-d*} Means within a row showing different letters are significantly different (p < 0.05). | | | | | | | |

The GPC fraction with the most intense glutamate-like taste, F2, was subdivided into 9 subfractions, F2-1 to F2-9, on a semi-preparative scale by RP-HPLC. The subfractions were assessed sensorially to identify the ones with glutamate-like taste. The taste profiles of the HPLC subfractions F2-1 to F2-9 are shown in Table 2. Subfractions F2-1 to F2-3 each had an umami and a sour taste. The other fractions were judged predominantly bitter. Subfraction F2-1 represents the void volume of the chromatogram and hence contains compounds which are not retained by the reversed phase column (RP-C18), such as polar amino acids. Most of the amino acids in F2-1 were found to be present in their free form, the ratio of free amino acids to peptides being approximately 3. On the other hand, subfractions F2-2 to F2-9 contain predominantly peptides. Further characterization was focused on the peptides in the HPLC fraction F2-2 which has a pronounced glutamate-like taste.

**Table 2.**

| **Taste Profiles of HPLC Subfractions from Wheat Gluten Hydrolysate**^{***a***} | | | | | | | | | |
|---|---|---|---|---|---|---|---|---|---|
| taste attribute | F2-1 | F2-2 | F2-3 | F2-4 | F2-5 | F2-6 | F2-7 | F2-8 | F2-9 |
| sweet | 0^{*b*}± 0 | 0^{*b*}± 0 | 0^{*b*}± 0 | 2^{*c*}± 1 | 0^{*b*}± 0 | 0^{*b*}± 0 | 0^{*b*}± 0 | 0^{*b*}± 0 | 0^{*b*}± 0 |
| sour | 29^{*e*}± 9 | 10^{*d*}± 6 | 14^{*d*}± 6 | 8^{*cd*}± 6 | 0^{*b*}± 0 | 4^{*bc*}± 3 | 0^{*b*}± 0 | 2^{*b*}± 1 | 0^{*b*}± 0 |
| salty | 22^{*c*}± 14 | 3^{*b*}± 3 | 0^{*b*}± 0 | 0^{*b*}± 0 | 0^{*b*}± 0 | 0^{*b*}±0 | 1^{*b*}± 0 | 0^{*b*}± 0 | 0^{*b*}± 0 |
| glutamate-like | 49^{*d*}± 17 | 15^{*c*}± 5 | 10^{*c*}± 5 | 0^{*b*}± 0 | 0^{*b*}± 0 | 0^{*b*}± 0 | 1^{*b*}± 1 | 0^{*b*}± 0 | 0^{*b*}± 0 |
| bitter | 0^{*b*}±0 | 15^{*de*}±8 | 5^{*bc*}±3 | 9^{*cd*}±6 | 22^{*e*}±10 | 20^{*e*}±10 | 31^{*f*}±11 | 16^{*de*}±10 | 8^{*bcd*}±4 |

| | | | | | | | | | |
|---|---|---|---|---|---|---|---|---|---|
| ^{a} The data are (ranging from row showing expressed as taste intensities (means) scored on a 100 mm line scale 0 = absent to 100 = very strong) by 8 trained panelists. ^{*b-f*} Means within a different letters are significantly different (p < 0.05). | | | | | | | | | |

Characterization of Peptides in the hydrolysate. Fraction F2-2 was further subfractionated by RP-HPLC and the eluting compounds corresponding to the major peaks were collected. The amino acid compositions of the freeze-dried subfractions F2-2-1 to F2-2-5 were determined and they were analyzed by ESI-MS/MS. The results are shown in Table 3. The peptide sequence analysis of the subfractions F2-2-2 to F2-2-5 revealed that the N-termini of all peptides were blocked and did not react with phenyl isothiocyanate during Edman degradation, thus insinuating a pyroglutamyl residue at the N-terminus which is known for blocking the Edman degradation. These findings are in accordance with the amino acid compositions and the proposed peptide sequences containing an N-terminal pyroglutamyl residue (Table 6). Based on the amino acid composition (Glx)₂, Pro and Ser, and the MS/MS data the peptide sequence for F2-2-2 (*m*/*z* 314) was identified as pGlu-Pro-Ser. It is concluded from the MS data and the amino acid analysis that subfraction F2-2-3 is pGlu-Pro.

The peptide sequence of F2-2-4 (*m*/*z* 356) is proposed as pGlu-Pro-Glu according to the MS data and the amino acid composition analysis. The peptide F2-2-5 was identified as pGlu-Pro-Gln. The identified pyroglutamyl peptides are likely to have been formed during the pasteurization of the hydrolysates from the corresponding N-terminal glutamine residues which are known to readily cyclize to pyroglutamic acid. On the basis of these findings it is concluded that the identified pyroglutamyl peptides contribute to the umami taste of fraction F2-2.

**Table 3.**

| **Amino Acid Composition and Proposed Peptide Sequences of Selected Peptides in HPLC Subfraction F2-2** | | | | |
|---|---|---|---|---|
| subfraction^{*a*} | amino acid composition | parent ion (m/z)^{*b*} | product ions by ESI-MS/MS (m/z)^{*b*} | proposed peptide sequence^{*c*} |
| F2-2-1 | Leu | 132.0 | 86 (immonium ion NH₂=CHR⁺ of Leu), 44 | Leu |
| F2-2-2 | Glx, Ser, Pro | 314.0 | 296 (M - H₂O), 209 (M - Ser)⁺, 106(Ser+H)⁺ | pGlu-Pro-Ser |
| F2-2-3 | Glx, Pro | 227.0 | 209 (M - H₂O)⁺, 181 (209 - CO)⁺, 116 (Pro + H)⁺, 70 (immonium ion NH₂=CHR⁺ of Pro) | pGlu-Pro |
| F2-2-4 | (Glx)₂, Pro | 356.0 | 338 (M - H₂O)⁺, 209 (M - Glu)⁺, 148 (Glu + H)⁺ | pGlu-Pro-Glu |
| F2-2-5 | (Glx)₂, Pro | 355.1 | 337 (M-H₂O)⁺, 209 (M-Gln)⁺, 147 (Gln + H)⁺, 130 (147-NH₃)⁺ | pGlu-Pro-Gln |

| | | | | |
|---|---|---|---|---|
| ^{*a*} HPLC fraction F2-2 was re-chromatographed and the subfractions representing single peaks were collected manually. ^{*b*}The column lists the measured MS and MSMS signals, respectively, obtained in the positive mode by electrospray ionization. ^{*c*}The peptide sequences were tentatively identified based on the amino acid composition and MS data. | | | | |

## Claims

1. Flavouring composition useful for imparting umami taste to food products, which comprises at least one pyroglutamyl peptide of the general formula :
pGlu-Pro-(X)ₙ
where n is 0 or 1
and X is selected from the group consisting of hydrophilic amino acids.

2. Flavouring composition according to claim 1, **characterized in that** X is selected from the group consisting of Ser, Glu and Gln.

3. Use of at least one pyroglutamyl peptide of the general formula :
pGlu-Pro-(X)ₙ
where n is 0 or 1 and X is selected from the group consisting of hydrophilic amino acids, in food products in an effective amount in order to induce an umami taste perception upon consumption.

4. Use according to claim 3, **characterized in that** X is selected in the group consisting of Ser, Glu and Gln.

5. Method for inducing an umami taste perception in consumers of a food product by adding an effective amount of the flavouring composition according claims 1 or 2 to the food product.
